# EUROPEAN PATENT SPECIFICATION

(11) **EP 1 676 714 B1**
(45) Date of publication and mention of the grant of the patent: **29.04.2009**
(21) Application number: 05257930.7
(22) Date of filing: 21.12.2005
(51) Int. Cl.: B42D 5/00

(54) **Perforated adhesive dispensing sheets**
Perforierte Folien zur Abgabe von Haftkleber
Films perforés de distribution d'adhésif

(30) Priority: 30.12.2004 US 26487
(43) Date of publication of application: 05.07.2006
(73) Proprietor: Glue Dots International, LLC, New Berlin, WI 53145 (US)
(72) Inventor: Downs, John P., Colgate, Wisconsin 53107 (US); Daun, Robin R., Waukesha, Wisconsin 53189 (US)
(74) Representative: Copsey, Timothy Graham

(56) References cited:
- EP-A- 0 609 826
- GB-A- 687 354
- US-B1- 6 319 442

## Description

### BACKGROUND OF THE INVENTION

Field of the Invention -- The present invention relates generally to pressure sensitive adhesive dispensing sheets, and more particularly to a perforated adhesive dispensing sheet for precisely dispensing individual and/or groups of adhesive segments.

In recent years, *crafting,* such as scrapbooking, rubber stamping, sewing, gift basket making, and candlemaking have become increasing popular. As these hobbies have developed over time, a large number of specialty products have evolved for specific application in the craft making arts.

The most popular crafting hobby to date is probably the art of making a scrapbook. Today's scrapbooks are more than just an assembly of photographs. Rather, scrapbooks are decorated, organized collections of drawings, paper crafts, letters, cards, keepsakes, newspaper clippings, and other mementos, in addition to photographs and personal journal inscriptions.

The scrapbook industry has developed specialized supplies such as books, papers, fabrics, pens, inks, and adhesives for the assembly of a scrapbook. Further, the advent of digital photography and desktop publishing has also facilitated the availability of customized, carefully selected photographs and drawings for inclusion into a scrapbook project. Indeed, there are several publications, including books and monthly scrapbooking magazines, devoted to the scrapbooking topic that are available for scrapbooking enthusiasts.

Decoration of a scrapbook, candle, gift basket, or other craft project includes the necessary arrangement and adhesion of decorative and specialty items to the project. Typically, hot glue or liquid glue has been used for these types of projects. However, hot glue guns can be dangerous, especially for younger crafters, and the high temperature of the glue can damage or distort the material to which it is applied. Further, liquid glues can be messy and require significant drying time before additional steps in the craft project can be taken. Liquid glue can also end up in unwanted locations on the craft item, detracting from the look of the finished product. Additionally, double sided tapes can be used, however, these tapes are bulky and conspicuous and thus detract from the look of the finished craft product.

Thermoplastic glue segments and/or pressure sensitive adhesive segments are another alternative for use in crafting. These types of adhesive segments are available on a paper backing material and are typically available in roll form. Such products are taught in U.S. Patent No. 5,935,670, U.S. Patent No. 6,319,442, and U.S. Patent No. 6,686,016, all to Downs, all of which assigned to the assignee of the present patent application.

In addition, adhesive segments are also available in sheet form. However, applying a single adhesive segment from a sheet of adhesive segments to an object can be difficult to accomplish without deformation of either the adhesive segment itself or the carrier sheet from which it is dispensed. In addition, applying only a single adhesive segment from an adhesive dispensing sheet can undesirably result in multiple adhesive segments coming off of the adhesive dispensing sheet at a time.

Thus, adhesive segments that are dispensed on a sheet of carrier material must be individually cut or otherwise separated from the sheet prior to dispensation. This type of adhesive segment separation is cumbersome, inconvenient, and time consuming, especially when it is desirable to only apply a single adhesive segment to a craft project.

Alternatively, adhesive segments that are provided in sheet form can be individually dispensed from the sheet by lifting an individual adhesive segment off of the carrier sheet. However, when the adhesive segment is removed from the sheet, at least one of the adhesive, tacky surfaces of the segment is exposed -- rendering the adhesive likely to stick to the fingers of the crafter, making the adhesive segment difficult to place on the craft project. In addition, the adhesive segment is deformed when manually pealed off of the carrier sheet resulting in a wrinkled or misshaped adhesive segment that is not fit for use on a craft project.

In addition, if an adhesive segment is dispensed from an opaque carrier sheet, the adhesive segment is obstructed by the carrier material as the adhesive segment is applied to a craft object, making the adhesive segment difficult to place on an item, especially where precise placement is required. In addition, once released from the backing material, the adhesive segment is difficult to remove and nearly impossible to reposition.
EP0609826 discloses a support for adhesive flat elements suitable to facilitate the selection and/or handling of paper items and the like in which a support element has a number of removable adhesive elements applied and these may be removed from the support by virtue of adhesion of the element by contact of the tip of a finger on the element. The support element is rigid and is not perforated. US6319442 discloses an extended length carrier strip of material and a method of manufacture thereof.

It is accordingly the primary objective of the present invention to provide an adhesive dispensing sheet including pressure sensitive adhesive segments in which a section of the carrier material including a single adhesive segment can be separated/detached from the carrier sheet, facilitating the application of individual adhesive segments onto a craft or scrapbook project. Therefore, it is a related object of the present invention to provide a perforated adhesive dispensing sheet wherein the release material includes perforations for separating individual and/or groups of adhesive segments.

It is an optional object of the present invention to provide a sheet of individually dispensable adhesive segments, wherein the sheet is not only perforated to permit a single adhesive segment to be separated from the sheet of adhesive segments, but wherein the adhesive segments are provided on a transparent carrier material, the transparent carrier material making it easy to place the adhesive in precise locations on an object.

It is also an objective of the present invention to provide a wide variety of perforated adhesive dispensing sheets for use in specialty projects, including pre-metered adhesives in the form of specific shapes, sizes, colors, and/or scents for easy and precise application to a craft project. It is a further objective of the present invention to provide an adhesive dispensing sheet including a transparent backing material for use in a variety of applications, including craft making and household applications as well as commercial and/or industrial applications.

The perforated adhesive dispensing sheets of the present invention must also be of construction which is practical and easy to use, and it should also require little or no skill on the part of the user to use. In order to enhance the market appeal of the adhesive dispensing tape of the present invention, it should also be of inexpensive construction to thereby afford it the broadest possible market. Finally, it is also an objective that all of the aforesaid advantages and objectives of the adhesive dispensing tape of the present invention be achieved without incurring any substantial relative disadvantage.

### SUMMARY OF THE INVENTION

The disadvantages and limitations of the background art discussed above are overcome by the present invention. With this invention, a perforated adhesive dispensing sheet for precise placement of a pressure sensitive adhesive as set out in Claim 1 is provided. The perforated adhesive dispensing sheets of the present invention are constructed of a carrier material, an array of adhesive segments and a protective layer of release material.

The carrier material is preferably constructed of a transparent polyester film having a heat resistance of up to approximately 260°C (five hundred degrees Fahrenheit). The carrier material may instead be constructed of any other transparent, semi-transparent or opaque material capable of withstanding temperatures of approximately 149 to 196° (three hundred to three hundred eighty-five degrees Fahrenheit) without deformation, although the characteristics will depend upon the type of adhesive that will be applied to the bottom carrier material. Such materials include, but are not limited to, polyester, polyethylene, polyvinyl chloride (PVC), vinyl, polystyrene, polypropylene, polyimide, and also include paper-based materials.

The carrier material is covered on a first release surface with a silicone release coating in order to provide the carrier material with the ability to easily release the adhesive segments without deformation of the adhesive segments. The carrier material may also be coated with any non-silicone release coating including water-based, wax based or solvent based release coatings. The carrier material may also be coated with a silicone release coating on a second release surface, depending on the desired end-use application of the adhesive dispensing sheet.

The carrier material may be supplied as rolls or as a continuous web prior to application of the adhesive, and cut into sheets thereafter. However, the carrier material may also be cut into sheets before adhesive application. As such, the carrier material may be cut or configured into any size or shape known to those skilled in the art before or after application of the adhesive, depending only upon the desired end use application.

The adhesive segments are applied to a first release surface of the carrier material by any method known to those skilled in the art,. The adhesive can be applied to the carrier material in any number of shapes (circles, squares, diamonds, triangles), sizes, thickness, colors, and/or scents. In addition, the same carrier material may include adhesives having differing sizes, shapes, or colors of adhesives. The adhesive may be allowed to cool or "skin over" after application of the hot adhesive to the carrier material.

Further, the adhesive segments may be applied to the carrier material in any configuration, pattern, or array of adhesive segments. For example, the adhesive segments may be applied in a six by six matrix, or a three by five matrix, depending upon the desired size of the adhesive dispending sheet and/or depending on the desired end-use application. In addition, the adhesive segments may be disposed very close together to maximize the amount of adhesive contained on the adhesive dispensing sheet.

Irrespective of the arrangement of adhesive segments applied to the carrier material, the carrier material is perforated between each adhesive segment on the carrier sheet, enabling a portion of the carrier material and a single adhesive segment to be separated from the adhesive dispensing sheet. Thus, the perforations permit each adhesive segment to be individually detached from the remaining adhesive dispensing sheet. The carrier material may be perforated either before or after adhesive application.

In addition, depending upon the end-use application, the sheet of carrier material may be perforated in any pattern -- e.g. between any two, three, etc. adhesive segments, permitting a portion of carrier material (containing two, three, or four adhesive segments) to be separated from the remaining portion of the adhesive dispensing sheet.

A protective layer of release material substantially the same size as the carrier material is provided over the adhesive segments. The protective layer can be constructed of the same material as the carrier material, or can be constructed of a different material. Such materials can include, but are not limited to, polyester, polyethylene, polyvinyl chloride (PVC), vinyl, polystyrene, polypropylene, polyimide, and paper or paper-based materials.

The protective layer is covered with a release coating on a first release surface thereof in order to provide the protective layer with the ability to easily release/separate from the adhesive segments. The protective layer may be coated with any silicone or non-silicone release coatings, including water-based, wax or paraffin-based or solvent-based release coatings.

Importantly, the protective layer is covered with a release coating having different release properties than the release coating applied to the carrier material, such that the protective layer provides more release than the carrier material, whereby the adhesive segments adhere more strongly to the carrier material than to the protective layer. The differential release properties of the release coating applied to the carrier material and the release coating applied to the protective layer ensure that the adhesive will remain adhered to the carrier material when the protective layer is removed or lifted away from the adhesive segments.

The protective layer is preferably perforated in the same pattern, configuration, and/or arrangement as the carrier material to facilitate separation of an individual adhesive segment or a group of adhesive segments from the adhesive dispensing sheet.

Accordingly, when adhesive is required by the user, a portion or section of the adhesive dispensing sheet containing an individual adhesive segment (or the desired number of adhesive segments) can be carefully torn from the adhesive dispensing sheet. To dispense the adhesive segment, the protective layer is removed from the adhesive dispensing sheet, exposing a surface of the adhesive segment to the object onto which it will be placed.

Because the carrier material is preferably constructed of a transparent material, the adhesive is readily viewable through the carrier material from a second release surface of the carrier material. Thus, the adhesive can be easily positioned in a desired location on an object or craft project. Because the user can easily see exactly where the adhesive is going to be applied, the present invention eliminates any guess work associated with adhesive application, saving time and enhancing the look of the project.

It may therefore be seen that the present invention teaches a perforated adhesive dispensing sheet for facilitating separation of a desired amount of adhesive from the adhesive dispensing sheet and for simplifying application of an individual adhesive segment onto an object. It can also be seen that the present invention teaches precise placement of a pressure sensitive adhesive onto an object by permitting a single adhesive segment to be dispensed apart from the complete sheet of adhesive and without requiring that the adhesive be manually lifted off of and separated from the carrier material. It can also be seen that the present invention teaches a wide variety of adhesive dispensing products wherein the carrier material can be transparent further simplifying placement of the adhesive segments.

The present invention also provides a wide variety of perforated adhesive dispensing products that can be used in a number of specialty projects, including pre-metered adhesives in the form of specific shapes, sizes, colors, and/or scents for easy and precise application to a craft project.

The perforated adhesive dispensing sheet of the present invention is of a construction which is both practical and easy to use, and requires little or no skill on the part of the user to use. The perforated adhesive dispensing sheet of the present invention is also of inexpensive construction to enhance its market appeal and to thereby afford it the broadest possible market. Finally, all of the aforesaid advantages and objectives of the perforated adhesive dispensing sheet of the present invention are achieved without incurring any substantial relative disadvantage.

### DESCRIPTION OF THE DRAWINGS

These and other advantages of the present invention are best understood with reference to the drawings, in which:

Fig. 1 is a perforated adhesive dispensing sheet having an array of adhesive segments disposed thereupon, which is manufactured according to the teachings of the present invention;

Fig. 2 is a side sectional view of the perforated adhesive dispensing sheet illustrated in Fig. 1 taken along line 2-2;

Fig. 3 is an isometric view of the perforated adhesive dispensing sheet illustrated in Figs. 1 and 2, showing the protective layer partially pealed away from the adhesive segments;

Fig. 4 is a top view of the perforated adhesive dispensing sheet illustrated in Figs. 1 through 3, showing an individual adhesive segment separated therefrom;

Fig. 5 is a top view of the perforated adhesive dispensing sheet illustrated in Figs. 1 through 3, showing a portion of adhesive segments separated therefrom;

Fig. 6 is a side view of an individual adhesive segment separated from the perforated adhesive dispensing sheet illustrated in Figs. 1 through 4, showing the protective layer partially pealed away from the adhesive segment;

Fig. 7 is a plan view showing the application of the adhesive segment illustrated in Fig. 6 onto a particular location in a scrapbook;

Fig. 8 is a second embodiment of the present invention, showing a perforated adhesive dispensing sheet having square adhesive segments disposed thereupon;

Fig. 9 is a third embodiment of the present invention, showing a perforated adhesive dispensing sheet having adhesive segments of a variety of shapes disposed thereupon; and

Fig. 10 is a fourth embodiment of the present invention, showing a perforated adhesive dispensing sheet including perforated adhesive segments disposed thereupon.

### DETAILED DESCRIPTION OF THE PREFERRED EMBODIMENT

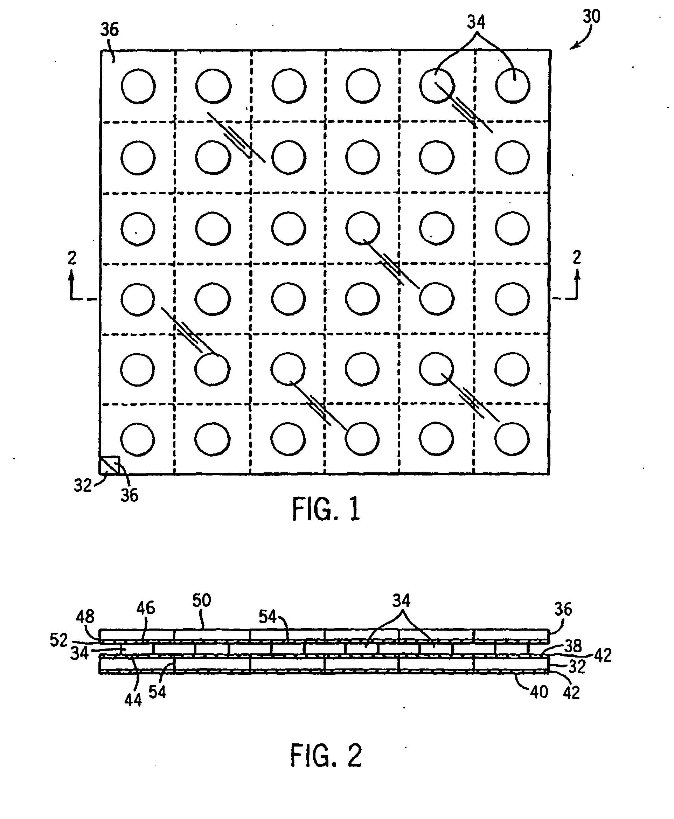

Fig. 1 shows a first embodiment of an adhesive dispensing sheet according to the present invention. An adhesive dispensing sheet 30 is constructed of a bottom carrier material 32, an array of adhesive segments 34 and a top protective layer 36.

The carrier material 32 includes a first release surface 38 on one side thereof and may include a second release surface 40 on the other side thereof. In preferred embodiments, the carrier material 32 is constructed of a transparent polyester film. Because the adhesive is applied to the carrier material in a molten state, the polyester film or other material must be capable of withstanding temperatures of up to approximately about 260°C (five hundred degrees Fahrenheit) without deformation.

Consistent with the broader aspects of the present invention, the carrier material 32 may be constructed of any flexible, transparent, semi-transparent, or tinted transparent material having a heat resistance of approximately about 149 to 196°C (three hundred to approximately about three hundred eighty-five degrees Fahrenheit) without deformation. Further, a transparent material having a lower heat resistance may also be used depending on the type and temperature of adhesive applied to the carrier material. Such carrier materials can include, but are not limited to, polyester, polyethylene, polyvinyl chloride (PVC), vinyl, polystyrene, polyimide, polypropylene, and polyolefin. Additionally, the carrier material 32 can be constructed of paper or a paper-based material (opaque, semi-transparent or transparent) capable of withstanding the adhesive application temperatures as described herein.

Depending upon the desired end-use product, the carrier material 32 may be provided as a continuous web and cut into sheets of carrier material before or after adhesive application. As will be apparent to those skilled in the art, the carrier material 32 may be cut into sheets of a variety of sizes and shapes, depending on the number of adhesive segments to be disposed thereon, or depending on the desired end-use application of the adhesive dispensing sheet. For example, the carrier material can be cut into a 76 by 127 mm sheet (three inch by five inch), a 102 by 152 mm (four inch by six inch), or any other desired sheet size.

As best illustrated in Fig. 2, the carrier material 32 is coated on its release surfaces 38 and 40 with a silicone release coating 42. The silicone release coating 42 is provided to ensure that the adhesive segments 34 can be easily removed from the carrier material 32 without deformation. Accordingly, the carrier material 32 may be coated with any silicone or non-silicone release coating or a combination thereof, including but not limited to water-based, wax or paraffin-based, and/or solvent-based release coatings.

As will be apparent to those skilled in the art, the carrier material 32 need only be coated with the silicone release coating 42 on one of its two release surfaces 38 or 40 -- depending on which release surface 38 or 40 the adhesive segments 34 will be disposed. As will further be appreciated by those skilled in the art, if the adhesive segments 34 will be disposed on both release surfaces 38 and 40 of the carrier material 32, both release surfaces 38 and 40 should be coated with the silicone release coating 42.

The adhesive segments 34 may be formed of any thermoplastic adhesive known to those skilled in the art, such as hot melt thermoplastic adhesives such as acrylics, natural and synthetic rubber-based adhesives, amorphous polyolefin adhesives, and pressure-sensitive silicones. Alternatively, pressure sensitive water-based adhesives can be used instead, thereby obviating the need for the carrier material 32 having high temperature characteristics. The adhesive is preferably transparent; however tinted or colored adhesives may also be used.

The adhesives or glues contemplated by the present invention include those demonstrating good adherence to a wide number of materials, such as fabric, paper, wood, resin, plastics, metals ceramic, foil, glass, expanded synthetic foam, and/or cement. The adhesive may be permanent or semi-permanent, and have any of a wide range of tack (degree of adhesiveness), depending on the specific project application.

The adhesive (using the typical hot melt thermoplastic adhesive material as the example used herein) is dispensed onto the first release surface 38 of the carrier material 32 at approximately about 177°C (three hundred fifty degrees Fahrenheit). However, application temperature can depend on the type of thermoplastic adhesive, the carrier material, and/or the release coating selected, and therefore the application temperature will vary depending on these factors.

The adhesive is preferably dispensed by a thermoplastic glue metering nozzle and supplied by a metering pump, as will be apparent to those skilled in the art and as disclosed in U.S. Patent No. 5,935,670 and U.S. Patent No. 6,319,442. As the first release surface 38 of the carrier material 32 moves underneath thermoplastic glue metering nozzle, adhesive is dispensed onto the carrier material 32 resulting in adhesive segments 34 having a bottom surface 44 and a top surface 46. An air jet may be directed onto the first release surface 38 to cool the adhesive segments 34 as the carrier material 32 moves along.

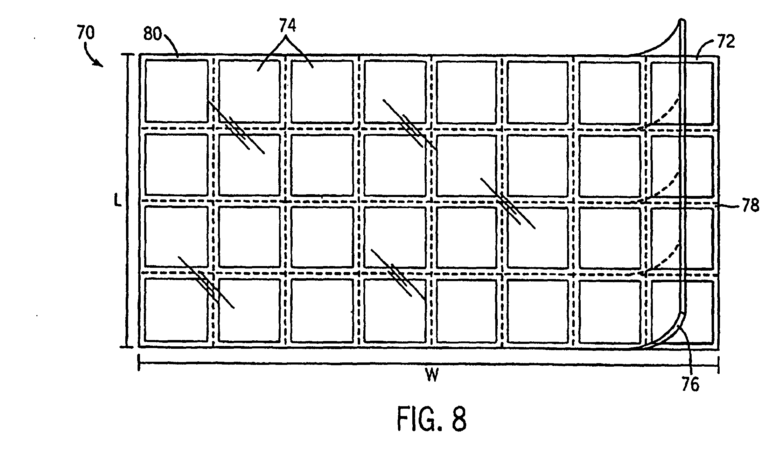

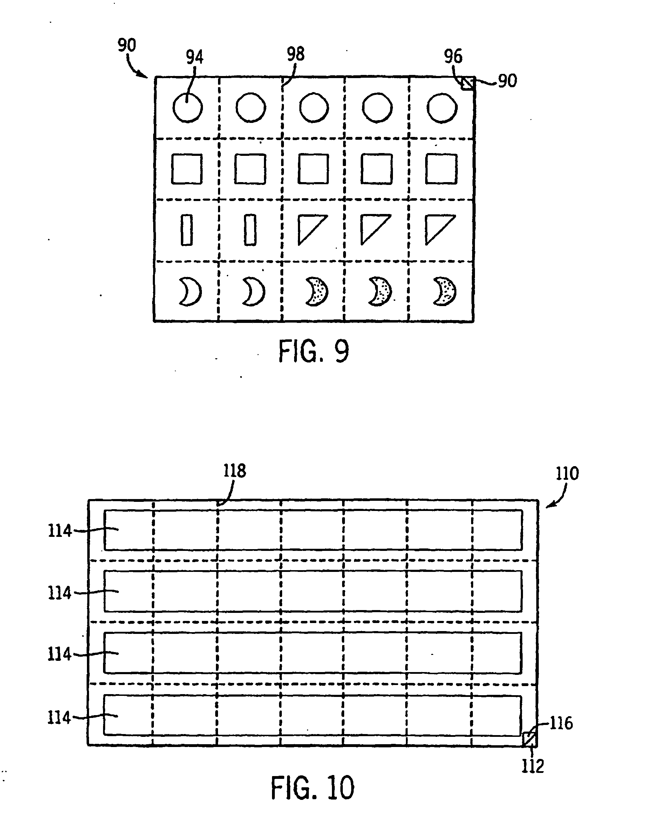

The adhesive segments 34 are dispensed onto the carrier material 32 in an array/matrix of adhesive segments 34 (a six by six matrix of adhesive segments 34 is shown in Fig. 1 for illustrative purposes). However, depending on the desired end-use application of the adhesive dispensing sheet 30, the adhesive segments 34 may be dispensed in any configuration, pattern, or arrangement, including larger or smaller adhesive segment matrices. In addition, the adhesive segments 34 can be dispensed close adjacent to each other and/or touching each other depending on the desired end-use of the adhesive dispensing sheet 30 (as illustrated in Figs. 8 and 10).

Fig. 1 illustrates adhesive segments 34 disposed onto the carrier sheet 32 in a disk shape or generally circular shape. However, it will be readily apparent to those skilled in the art that the adhesive segments 34 may be dispensed in any shape, size, thickness, or form. For example, as illustrated in Fig. 8, the adhesive segments 34 may be dispensed as squares. Accordingly, and without limitation, the adhesive segments 34 may be formed in the shape of diamonds, triangles, lines, or stars and in a variety of colors (which are facilitated by simply adding a dye or colorant to the adhesive material).

Accordingly, consistent with the broader aspects of the present invention, the adhesive may be disposed on the carrier material 32 in a wide variety of sizes, shapes, colors (including transparent adhesives), and scents. For example, in making an adhesive segment for use with gift cards secured to a letter or other paper sheet for a coffee franchise, adhesive segments which smell like coffee could be used. Further, the adhesive segments may vary in thickness from being very thin to being relatively thick, depending on the desired end-use application.

The protective layer 36 is provided over the adhesive segments 34 to prevent the tacky, top surfaces 46 of each of the adhesive segments 34 from undesirably adhering to objects which they may contact. The protective layer 36 is constructed of a release material including, but not limited to, polyester, polyethylene, polyvinyl chloride (PVC), vinyl, polystyrene, polyimide, polypropylene, polyolefin, paper, and/or paper-based materials. The protective layer 36 may be transparent, semi-transparent, tinted or opaque. Further, the protective layer 36 may be constructed of the same material as the carrier material 32.

The protective layer 36 contains a first surface 48 and a second surface 50. As best illustrated in Fig. 2, the protective layer 36 is coated on its first surface 48 with a silicone release coating 52. The silicone release coating 52 is provided to ensure that the protective layer 36 can be easily removed/peeled away from the adhesive segments 34 on the carrier material 32. Accordingly, the protective layer 36 may be coated with any silicone or non-silicone release coating or a combination thereof, including but not limited to water-based, wax or paraffin-based and/or solvent-based release coatings. It will be appreciated by those skilled in the art that the second surface 50 of the protective layer 36 may also be provided with a release coating if required by the desired end-use application.

Importantly, the silicone release coating 52 on the first surface 48 of the protective layer 36 provides more release than the silicone release coating 42 on the first release surface 38 of the carrier material 32. In particular, the silicone release coating 52 on the first surface 48 of the protective layer 36 may be thicker than the silicone release coating 42 on the first release surface 38 of the carrier material 32. Alternately, the silicone release coating 52 on the first surface 48 of the protective layer 36 may contain a heavier coverage of silicone release material than the silicone release coating 42 on the first release surface 38 of the carrier material 32. In addition, the protective layer 36 and the carrier material 32 may be provided with another type of release coating so long.as the release coating 52 on the first surface 48 of the protective layer 36 is provided with more release than the release coating 42 on the first release surface 38 of the carrier material 32. Thus, it is considered within the scope of the present invention that the release coating 52 on the protective layer 36 and the release coating 42 on the carrier material 32 can be different types of release coatings.

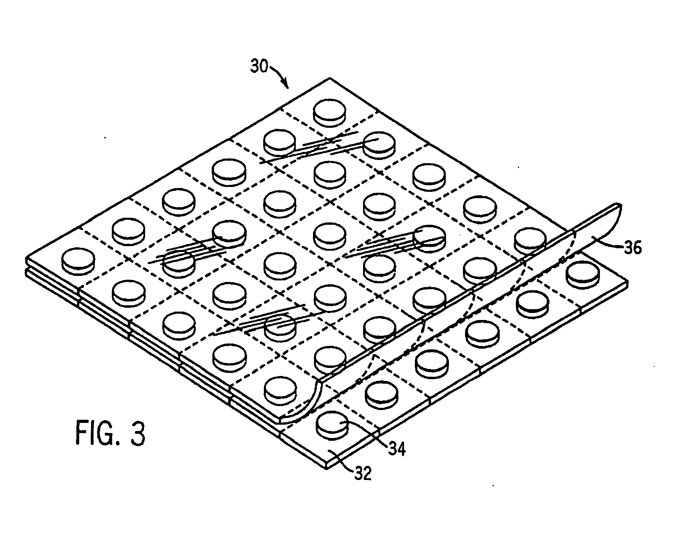

As illustrated in Fig. 3, the differential release properties of the silicone release coating 52 on the first surface 48 of the protective layer 36 and the silicone release coating 42 on the first release surface 38 of the carrier sheet 32, the fact that the adhesive 34 was initially applied in a hot state to the first release surface 38 of the carrier sheet 32 causing better adherence, and the fact that there is some cooling and hence "skinning over" of the adhesive 34 prior to removal of the protective layer 36 all ensure that the adhesive 34 remains adhered to the first release surface 38 of the carrier material 32 as the protective layer 36 is removed from the adhesive dispensing sheet 30.

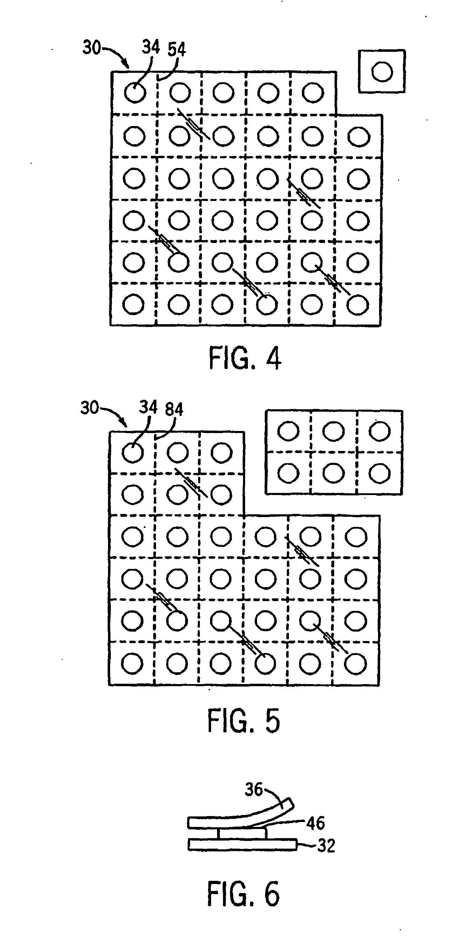

As illustrated in Figs. 4 through 6, in addition to Figs. 1 and 2, the carrier sheet 32 and the protective layer 36 are provided with perforations 54 for separating an individual adhesive segment 34 (as illustrated in Fig. 4) or a portion of adhesive segments (as illustrated in Fig. 5) from the adhesive dispensing sheet 30. Preferably, the perforations 54 separate and are located in between each adhesive segment 34 in the adhesive dispensing sheet 30.
However, the perforations 54 may also separate groups or portions of adhesive segments 34. Consistent with the broader aspects of the present invention, the carrier material 32 and the protective layer 36 may alternatively be provided with tear folds, tear lines or any other separating means known to those skilled in the art for detaching a single adhesive segment 34 or groups of adhesive segments 34 from the adhesive dispensing sheet 30.

The carrier sheet 32 and the protective layer 36 preferably contain perforations 54 that are formed in substantially straight lines (as illustrated in Fig. 1). However, the perforations 54 may also be formed in wavy or curvilinear lines or the perforations 54 may conform to the shape of the adhesive segments 34. In addition, the perforations 54 can be provided to minimize the amount of area of the carrier material 32 and protective layer 36 around the adhesive segment 34 (as illustrated in Fig. 8).

As illustrated in Figs. 1 through 5, the perforations 54 formed in the carrier material 32 and the protective layer 36 are formed in matching patterns, i.e. the perforations 54 are aligned with one another to facilitate tearing of the adhesive dispensing sheet 30. Alternatively, the perforations 54 on the carrier material 32 may be formed in a different pattern than the perforations 54 formed in the protective layer 36. Further, it will also be appreciated by those skilled in the art that either the protective layer 36 or the carrier material 32 can be provided without perforations.

As illustrated in Fig. 6, an individual adhesive segment 56 is shown separated from the adhesive dispensing sheet 30. Prior to dispensation of the adhesive, the protective layer 36 is easily removed/lifted away, exposing the top surface 46 of the adhesive segment 56, which remains adhered to the carrier material 32.

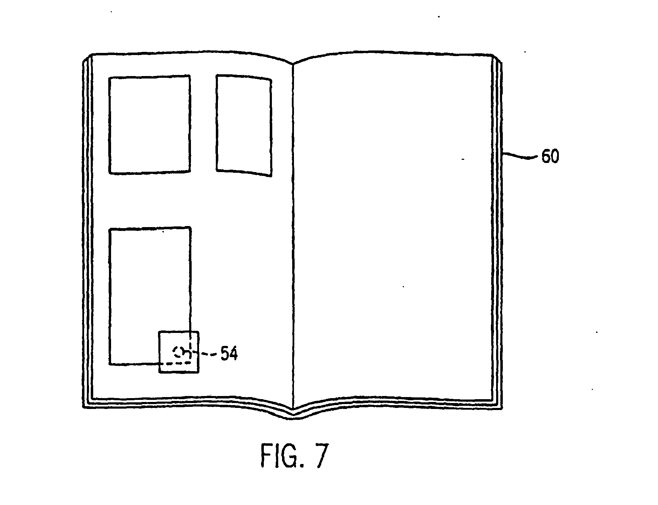

As illustrated in Fig. 7, the individual adhesive segment 56 is separated from the adhesive dispensing sheet 30 (shown in Fig. 1) using the perforations 54. Because the carrier material 32 is transparent, the adhesive segment 56 can easily be seen through the carrier material 32. As such, the adhesive segment 56 on the first release surface 38 of the carrier material 32 can be easily positioned over a scrapbook 60 or other item in the precise location of its intended application. Once correctly positioned, the adhesive segment 56 may be applied to the scrapbook 60 by contacting the adhesive segment 54 with the desired surface.

Fig. 8 illustrates a second embodiment of the present invention including an adhesive dispensing sheet 70 including a transparent carrier material 72, an array of adhesive segments 74 and a protective top layer 72. The carrier material 72 and the protective layer 76 each contain a silicone release coating applied in a similar manner to that detailed with respect to the first embodiment shown in Figs. 1 through 6. The silicone release coating is selectively applied so that the carrier material 72 provides less release than the protective layer 76. In particular, the protective layer 76 may contain a thicker coating of silicone release coating and/or contain a heavier coverage of silicone release coating than that applied to the carrier material 72.

The adhesive segments 74 are disposed on a first release surface 78 of the carrier material 72 in the form of a square. The adhesive segments are located close adjacent to each other to maximize the number of adhesive segments 74 on the adhesive dispensing sheet 70. Preferably, however, the spacing of the adhesive segments 74 is such that the adhesive segments 74 do not overlap along the longitudinal length "L" or across the transverse width "W" of the carrier material 72. This ensures that there is a margin 80 surrounding each adhesive segment 74 such that an individual adhesive segment 74 may be removed from the adhesive dispensing sheet 70 without the risk of removing or deforming the remainder of the adhesive segments 74 on the adhesive dispensing sheet 70 and without the risk of an object picking up multiple adhesive segments 74 from the adhesive dispensing sheet 70.

As described above, the differential application of silicone release coating to the carrier material 72 and the protective layer 76 in combination with the construction of the adhesive dispensing sheet 70 ensure that the adhesive segments 74 remain adhered to the first release surface 78 of the carrier material 72 when the protective layer 76 is peeled away from the carrier material 72.

As further illustrated in Fig. 8, the adhesive dispensing sheet 70 includes perforations 82 located in both the carrier material 72 and the protective layer 76 for facilitating the separation of an individual adhesive segment 74 from the adhesive dispensing sheet 70.

Turning next to Fig. 9, a third embodiment of the present invention is shown. It will be apparent to those skilled in the art that any size or shape of adhesive segment may be contained on an adhesive dispensing sheet 90 of the present invention. For example, a carrier material 92 may include adhesive segments 94 disposed thereupon in a variety of shapes such as circles, squares, triangles, crescents, and line segments. A protective layer 96 is provided over the adhesive segments 94 in a similar manner to that detailed with respect to the first embodiment shown in Figs. 1 through 6. Likewise, as also illustrated in Fig. 9, colored adhesive segments 94 may also be provided.

The carrier material 92 and the protective layer 96 of the adhesive dispensing sheet 90 are provided with perforations 98, in a similar manner to that detailed with respect to the first embodiment shown in Figs. 1 through 6, in order for the user to selectively detach the desired adhesive segment shape.

Accordingly, consistent with the broader aspects of the present invention, the adhesive may be disposed on the transparent carrier material in a wide variety of sizes, shapes, colors (including transparent adhesives), and scents. For example, in making an adhesive segment for use with gift cards secured to a letter or other paper sheet for a coffee franchise, adhesive segments which smell like coffee could be used. Further, the adhesive segments may very in thickness from being very thin to being relatively thick, depending on the desired end-use application.

Fig. 10 illustrates a fourth embodiment of the present invention including an adhesive dispensing sheet 110 which includes a transparent carrier material 112, adhesive segments 114 disposed thereon, and a protective top layer 116. The carrier material 112 and the protective layer 116 each contain a silicone release coating (not shown in Fig. 10) applied in a similar manner to that detailed with respect to the first embodiment shown in Figs. 1 through 6. The silicone release coating is selectively applied so that the carrier material 112 provides less release than the protective layer 116. In particular, the protective layer 116 may contain a thicker coating of silicone release coating and/or contain a heavier coverage of silicone release coating than that applied to the carrier material 112.

As further illustrated in Fig. 10, the adhesive dispensing sheet 110 includes perforations 118 for dispensing adhesive from the adhesive dispensing sheet 110. Importantly, the perforations 118 pass through the carrier material 112, (optionally) through the adhesive segments 114, and through the protective layer 116. Thus, adhesive segments 114 of any size can be dispensed from the adhesive dispensing sheet 110 by simply tearing/separating the desired amount of adhesive from the adhesive dispensing sheet 110.

It may therefore be appreciated from the above detailed description of the present invention that a perforated adhesive dispensing sheet is provided for dispensing thermoplastic, pressure sensitive, adhesive segments for easy placement of individual adhesive segments in precise locations on an object. It will also be appreciated that the present invention provides a method for dispensing pressure sensitive adhesives that permits the user of the adhesive to easily detach the desired amount of adhesive from the adhesive dispensing sheet and allows the user the ability to see the adhesive segment to be applied, and visually guide its precise placement on an object.

The present invention also provides a wide variety of perforated adhesive dispensing sheets (or adhesive dispensing sheets) for use in specialty projects, including pre-metered adhesives in the form of specific shapes, sizes, colors, and scents for easy and precise application to a craft project. Accordingly, the present invention provides a perforated adhesive dispensing sheet including a transparent backing material for use in a variety of applications including craft making and household applications as well as commercial and/or industrial applications.

Although the foregoing description of the perforated adhesive dispensing sheet of the present invention has been shown and described with reference to particular embodiments and applications thereof, it has been presented for purposes of illustration and description and is not intended to be exhaustive or to limit the invention to the particular embodiments and applications disclosed. The particular embodiments and applications were chosen and described to provide the best illustration of the principles of the invention and its practical application to thereby enable one of ordinary skill in the art to utilize the invention in various embodiments and with various modifications as are suited to the particular use contemplated. All such changes, modifications, variations, and alterations should therefore be seen as being within the scope of the present invention as determined by the appended claims when interpreted in accordance with the breadth to which they are fairly, legally, and equitably entitled.

## Claims

1. An adhesive dispensing sheet (30) for precise placement of adhesive comprising:
a bottom release material (32) having a first release surface (38);
a first release coating (42) applied to said first release surface;
a plurality of pressure sensitive adhesive segments (34) non-contiguously applied to said first release surface of said bottom release material;
a second surface (40) on the bottom release material which is constructed of a flexible transparent material, wherein each of said pressure sensitive adhesive segments are visible through said transparent carrier material from said second surface to said first release surface; and
a first set of perforations (54) formed in said bottom release material in between each of said non-contiguously applied adhesive segments, wherein each of said adhesive segments disposed on a respective portion of said bottom release material is separable from a remaining portion of adhesive segments on a remaining portion of said bottom release material.

2. An adhesive dispensing sheet as defined in Claim 1, wherein said pressure sensitive adhesive segments are formed in the shape of any of disks, lines stars, ovals, squares, diamonds, triangles, or a combination thereof.

3. An adhesive dispensing sheet as defined in Claim 1 or Claim 2, wherein said pressure sensitive adhesive segments are transparent, colored, scented, or a combination thereof.

4. An adhesive dispensing sheet as defined in any preceding Claim, further comprising a top release material (36) having a first release surface (48) coated with a second release coating (52), said top release material disposed over said adhesive segments, wherein said second release coating provided on said first release surface of said top release material provides said top release material with more release than said first release coating (42) provided on said first release surface (38) of said bottom release material (32).

5. An adhesive dispensing sheet as defined in Claim 4, wherein said top release material further comprises a second set of perforations formed in said top release material, said second set of perforations provided in between each of said non-contiguously applied adhesive segments, and wherein said second set of perforation may be formed in the same pattern as said first set of perforations.

6. An adhesive dispensing sheet as defined in any preceding Claim wherein said top release material and/or said bottom release material is constructed from polyester, polyethylene, polyvinyl chloride, vinyl, polystyrene, polyimide, polyolefin, paper, or combinations thereof.

7. An adhesive dispensing sheet as defined in any preceding Claim, wherein said first release coating and/or said second release coating is a silicone release coating.

8. An adhesive dispensing sheet as defined in any preceding Claim, wherein said pressure sensitive adhesive segments are non-contiguously applied to said carrier sheet in a generally rectangular matrix formation.

9. An adhesive dispensing sheet as defined in any preceding claim, wherein each respective portion of said bottom carrier material includes only one pressure sensitive adhesive segment.

## Patentansprüche

1. Haftkleber-Abgabefolie (30) zum exakten Platzieren von Haftkleber, mit:
einem unteren Ablösematerial (32) mit einer ersten Ablösefläche (38);
einer ersten Ablösebeschichtung (42), die auf der ersten Ablösefläche aufgebracht ist;
einer Mehrzahl von druckempfindlichen Haftklebersegmenten (34), die auf der ersten Ablösefläche des unteren Ablösematerials nicht-zusammenhängend aufgebracht sind;
einer zweiten Fläche (40) am unteren Ablösematerial, die aus einem flexiblen, transparenten Material gebildet ist, wobei jedes der druckempfindlichen Haftklebersegmente durch das transparente Trägermaterial von der zweiten Fläche zur ersten Ablösefläche sichtbar ist; und
einem ersten Satz Perforationen (54), die im unteren Ablösematerial zwischen den nicht-zusammenhängenden, druckempfindlichen Haftklebersegmenten gebildet sind, wobei jedes der Haftklebersegmente, das auf einem jeweiligen Teil des unteren Ablösematerials angeordnet ist, von einem restlichen Teil der Haftklebersegmente auf einem restlichen Teil des unteren Ablösematerials trennbar ist.

2. Haftkleber-Abgabefolie nach Anspruch 1, wobei die druckempfindlichen Haftklebersegmente in Form von Scheiben, Linien, Sternen, Ovalen, Recktecken, Rhomben, Dreiecken oder einer Kombination davon vorliegen.

3. Haftkleber-Abgabefolie nach Anspruch 1 oder 2, wobei die druckempfindlichen Haftklebersegmente transparent, farbig oder parfümiert sind oder in einer Kombination davon vorliegen.

4. Haftkleber-Abgabefolie nach einem vorherigen Anspruch, weiters mit einem oberen Ablösematerial (36), das eine erste Ablösefläche (48) aufweist, die mit einer zweiten Ablösebeschichtung (52) versehen ist, wobei das obere Ablösematerial über den Haftklebersegmenten angeordnet ist,
wobei die auf der ersten Ablösefläche des oberen Ablösematerials vorgesehene zweite Ablösebeschichtung dieses obere Ablösematerial mit einer leichteren Ablösbarkeit versieht als die erste Ablösebeschichtung (42), die auf der ersten Ablösefläche (38) am unteren Ablösematerial (32) aufgebracht ist.

5. Haftkleber-Abgabefolie nach Anspruch 4, wobei das obere Ablösematerial weiters einen zweiten Satz Perforationen aufweist, die im oberen Ablösematerial gebildet sind, wobei der zweite Satz Perforationen zwischen den nicht-zusammenhängend angebrachten Haftklebersegmenten vorgesehen ist, und wobei der zweiten Satz Perforationen im gleichen Muster wie der erste Satz Perforationen gebildet sein kann.

6. Haftkleber-Abgabefolie nach einem vorherigen Anspruch, wobei das obere Ablösematerial und/oder das untere Ablösematerial aus Polyester, Polyethylen, Polyvinylchlorid, Vinyl, Polystyrol, Polyimid, Polyolefin, Papier oder Kombinationen davon hergestellt ist bzw. sind.

7. Haftkleber-Abgabefolie nach einem vorherigen Anspruch, wobei die erste Ablösebeschichtung und/oder die zweite Ablösebeschichtung eine Silikon-Ablösebeschichtung ist bzw. sind.

8. Haftkleber-Abgabefolie nach einem vorherigen Anspruch, wobei die druckempfindlichen Haftklebersegmente in einer allgemein rechteckigen Matrixform auf der Trägerfolie nicht-zusammenhängend aufgebracht sind.

9. Haftkleber-Abgabefolie nach einem vorherigen Anspruch, wobei jeder entsprechende Teil des unteren Trägermaterials nur ein druckempfindlichen Haftklebersegment enthält.

## Revendications

1. Feuille de distribution d'adhésif (30) conçue pour le positionnement précis d'un adhésif, comprenant :
un matériau de fond anti-adhérent (32) ayant une première surface anti-adhérente (38) ;
un premier revêtement anti-adhérent (42) appliqué sur ladite première surface anti-adhérente ;
une pluralité de segments adhésifs sensibles à la pression (34) appliqués de manière non contigüe sur ladite première surface anti-adhérente dudit matériau de fond anti-adhérent ;
une seconde surface (40) sur le matériau de fond anti-adhérent, constituée d'un matériau souple transparent, dans laquelle chacun desdits segments adhésifs sensibles à la pression est visible à travers ledit matériau support transparent de ladite seconde surface à ladite première surface anti-adhérente ; et
un premier ensemble de perforations (54) formées dans ledit matériau de fond anti-adhérent entre chacun desdits segments adhésifs appliqués de manière non contigüe, dans laquelle chacun desdits segments adhésifs disposé sur une partie respective dudit matériau de fond anti-adhérent, est séparable d'une partie restante de segments adhésifs reposant sur une partie restante dudit matériau de fond anti-adhérent.

2. Feuille de distribution d'adhésif selon la revendication 1, dans laquelle lesdits segments adhésifs sensibles à la pression sont façonnés en n'importe quelle forme parmi : des disques, des barres, des étoiles, des carrés, des losanges, des triangles ou une combinaison de ceux-ci.

3. Feuille de distribution d'adhésif selon la revendication 1 ou la revendication 2, dans laquelle lesdits segments adhésifs sensibles à la pression sont transparents, colorés, aromatiques, ou une combinaison de ces caractéristiques.

4. Feuille de distribution d'adhésif selon l'une quelconque des revendications précédentes, comprenant en outre un matériau anti-adhérent supérieur (36) doté d'une première surface anti-adhérente (48) revêtue d'un second revêtement anti-adhérent (52), ledit matériau anti-adhérent supérieur étant disposé au-dessus desdits segments adhésifs, dans laquelle ledit second revêtement anti-adhérent positionné sur ladite première surface anti-adhérente dudit matériau anti-adhérent supérieur fournit audit matériau anti-adhérent supérieur une anti-adhérence supérieure à celle du premier revêtement anti-adhérent (42) fourni sur ladite première surface anti-adhérente (38) dudit matériau de fond anti-adhérent (32).

5. Feuille de distribution d'adhésif selon la revendication 4, dans laquelle ledit matériau anti-adhérent supérieur comprend en outre un second ensemble de perforations formées dans ledit matériau anti-adhérent supérieur, ledit second ensemble de perforations étant disposé entre chacun desdits segments adhésifs appliqués de manière non contigüe, et dans laquelle ledit second ensemble de perforations peut être formé selon un motif similaire à celui dudit premier ensemble de perforations.

6. Feuille de distribution d'adhésif selon l'une quelconque des revendications précédentes, dans laquelle ledit matériau anti-adhérent supérieur et/ou ledit matériau de fond anti-adhérent est fait de polyester, polyéthylène, polychlorure de vinyle, vinyle, polystyrène, polyimide, polyoléfine, papier ou de combinaisons de ceux-ci.

7. Feuille de distribution d'adhésif selon l'une quelconque des revendications précédentes, dans laquelle ledit premier revêtement anti-adhérent et/ou ledit second revêtement anti-adhérent est un revêtement anti-adhérent en silicone.

8. Feuille de distribution d'adhésif selon l'une quelconque des revendications précédentes, dans laquelle lesdits segments adhésifs sensibles à la pression sont appliqués de manière non contigüe sur ladite feuille support selon une configuration de matrice généralement rectangulaire.

9. Feuille de distribution d'adhésif selon l'une quelconque des revendications précédentes, dans laquelle chaque partie respective dudit matériau support de fond comprend uniquement le segment adhésif sensible à la pression.
